# EUROPÄISCHE PATENTSCHRIFT

(11) **EP 1 657 120 B1**
(45) Veröffentlichungstag und Bekanntmachung des Hinweises auf die Patenterteilung: **22.08.2007**
(21) Anmeldenummer: 04027070.4
(22) Anmeldetag: 15.11.2004
(51) Int. Cl.: B60R 21/09, B60T 7/06

(54) **Elektromechanische Feststellbremse**
Electromechanical Parking brake of
Système de frein électromécanique pour le stationnement

(43) Veröffentlichungstag der Anmeldung: 17.05.2006
(73) Patentinhaber: Toklan Toos Ind. MfG. Co., 93561 Mashhad (IR)
(72) Erfinder: Azadi Rad, Golnaz, Mashhad (IR); Barati, Ali, Mashhad (IR); Hayeri, Azadeh, 91779 Mashhad (IR); Mahmoodinejad, Majid, Mashhad (IR); Omidvar, Sedighe, 91786 Mashhad (IR); Raoofian, Amirreza, 91786 Mashhad (IR); Solaymani, Samira, 91898 Mashhad (IR); Taghadomi, Masood, Mashhad (IR); Torbati, Emad, Mashhad (IR)
(74) Vertreter: Neuhäuser, Uwe

(56) Entgegenhaltungen:
- EP-A- 1 004 491
- EP-A- 1 085 240
- WO-A-03/008248
- DE-A1- 3 909 907
- DE-A1- 10 061 006
- DE-A1- 19 653 961
- DE-C1- 19 926 604
- US-A- 3 937 994
- US-A1- 2002 027 386
- US-A1- 2003 033 073
- US-B1- 6 193 022

## Beschreibung

Die Erfindung betrifft eine elektromechanische Feststellbremse an Kraftfahrzeugen, mit einem Elektromotor, der seinerseits über ein Getriebe und zumindest ein Kraftübertragungselement mit zumindest einer Radbremse wirkverbunden ist, wobei der Elektromotor vermittels einer elektronischen Regel- und Steuereinheit ansteuerbar ist. Die Erfindung betrifft ferner ein Verfahren zum Betreiben einer solchen elektromechanischen Feststellbremse.

Eine Feststellbremse der gattungsgemäßen Art ist bereits seit geraumer Zeit in ihren Grundzügen aus der DE-A-2 035 349 bekannt. Danach ist vorgesehen, dass über vorhandene Bedienfunktionen im Bereich des Kraftfahrzeugantriebes eine sogenannte kraftführende Einrichtung elektrisch gesteuert wird, die ihrerseits über eine Längsbewegung die bremswirksamen Teile bewegt, wobei zur elektrischen Steuerung der kraftführenden Einrichtung mechanisch-elektrisch arbeitende Schalter für die Bedienfunktionen Zündschalten, Kuppeln und Gangschalten angeordnet sein sollen. Des Weiteren wird mit dieser Druckschrift vorgeschlagen, dass als kraftführende Einrichtung ein in der Laufrichtung umschaltbarer Elektromotor verwendet wird, der über ein Getriebe eine mechanische Längsbewegung erzeugt. Hinweise, wie die kraftführende Einrichtung einschließlich des Getriebes konkret ausgebildet ist und/oder die Ansteuerung derselben konkret erfolgt, sind dieser Druckschrift nicht zu entnehmen.

Demgegenüber wird mit der EP 0 478 642 B1 eine komplizierte und demgemäß kosten- und wartungsintensive Betätigungseinrichtung für eine Kraftfahrzeug-Feststellbremse offenbart, die ihrerseits eine vermittels eines Elektromotors angetriebene Gewindespindel umfasst, in deren Steilgewinde mittels einer Sperrklinke ein Klinkenhebel eingreift, der seinerseits über ein an demselben angreifendes Seil mit Bremsorganen der Radbremse wirkverbunden ist. Die Steuer- und Regeleinrichtung zur Funktionsüberwachung und/oder zur Steuerung der Feststellbremse soll dabei in Abhängigkeit von Betriebsparametern des Kraftfahrzeugs und/oder des Elektromotors erfolgen, wobei als Regelgrößen zum einen der Motorstrom des Elektromotors und zum anderen ein sensierter Fahrzeugstillstand, eine bestimmte sensierte Fahrbahnneigung, ein eingelegter Gang bzw. bei Automatikgetrieben eine eingelegte Fahrstufe, die Betätigung des Gaspedals und/oder die Betätigung eines Kupplungspedals dienen sollen.

Weitere mögliche Ausbildungen von Betätigungseinheiten für eine elektromechanisch betätigbare Feststellbremse, die ihrerseits ebenfalls über einen kostenaufwendigen und vermittels eines Elektromotors betriebenen Gewindetrieb eine Zugkraft auf ein Bremsseil ausüben, sind aus der DE 199 55 080 A1 und der EP 1 056 961 B1 bekannt.

Aufgabe der Erfindung ist es nunmehr, eine Feststellbremse der gattungsgemäßen Art zu schaffen, die bei geringem Investitionsaufwand eine erhöhte Betriebssicherheit aufweist. Ebenfalls ist es Aufgabe der Erfindung, ein geeignetes Verfahren zum Betreiben einer solchen elektromechanischen Feststellbremse anzugeben.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

WO 03/008248 offenbart ein Elektromechanische Feststellbremse die als nachtsliegender Stand der Technik angesehen wird.

Ausgehend von einer elektromechanischen Feststellbremse an Kraftfahrzeugen, mit einem Elektromotor, der seinerseits über ein Getriebe und zumindest ein Kraftübertragungselement mit zumindest einer Radbremse wirkverbunden ist, wobei der Elektromotor vermittels einer elektronischen Regel- und Steuereinheit ansteuerbar ist, wird die Aufgabe demnach dadurch gelöst, dass der elektronischen Regel- und Steuereinheit zumindest eine Radsensorik zur Erfassung des aktuellen Fahrtzustandes des Kraftfahrzeugs zugeordnet.

Durch diese Maßnahme kann besonders einfach und kostengünstig eine wichtige Regelgröße der elektronischen Regel- und Steuereinheit bereitgestellt werden, die im Ergebnis zu einer erhöhten Funktionssicherheit der elektromechanischen Feststellbremse führt.

Die Radsensorik zur Erfassung des aktuellen Fahrtzustandes des Kraftfahrzeugs ist dabei vorzugsweise durch einen drehfest angeordneten Sensor mit Drehzahl-, Drehrichtungs- und Stillstandserkennung sowie einem zu diesem korrespondierenden und mit einem Rad des Kraftfahrzeugs drehverbundenen Zahnrotor gebildet.

Als besonders zweckmäßig hat sich insoweit ein berührungsloser Sensor, wie ein induktiver Sensor erwiesen.

Wie die Erfindung weiter vorsieht, umfasst das Getriebe eine mit der Motorwelle des Elektromotors drehverbundene Riemenscheibe, welcher zumindest ein wenigstens abschnittsweise flexibles Zugelement zugeordnet ist, wobei das Zugelement einerends im Bereich des Außenumfanges der Riemenscheibe an derselben aufwickelbar festgelegt ist und anderenends mit einem Hebelelement verbunden ist, das seinerseits über besagtes Kraftübertragungselement mit der zumindest einen Radbremse wirkverbunden ist.

Dieses Getriebe ist im Hinblick auf den Stand der Technik besonders einfach und kostengünstig und kann aufgrund des an sich bekannten Hebelprinzips mit relativ geringen Motorkräften, jedoch realisierbaren hohen Bremskräften in kürzester Zeiteinheit ein Schließen und Öffnen der angeschlossenen Bremsen bewirken.

Gemäß einer vorteilhaften Weiterbildung der Erfindung verfügt das Kraftübertragungselement über ein Mittel zur Realisierung einer konstanten Zugspannung in demselben und/oder zur Voreinstellung der zueinander in Reibschluss tretenden Bremsorgane der Radbremse.

Was die elektronische Regel- und Steuereinheit der elektromechanischen Feststellbremse anbelangt, weist diese neben einem Eingang für vom Sensor der Radsensorik generierte Signale des Weiteren wenigstens einen Eingang zum Einlesen eines etwaigen Zündvorganges, einen Eingang zum Einlesen einer etwaigen Kupplungsbetätigung, einen Eingang zum Einlesen eines etwaige betätigten ersten Ganges, einen Eingang zum Einlesen eines etwaige betätigten Rückwärtsganges sowie einen Mikrocontroller zur Bereitstellung von Steuersignalen zur Ansteuerung des Elektromotors auf, wodurch in vorteilhafter Weise Regelgrößen kombiniert sind, die eine besonders zuverlässige Ansteuerung des Elektromotors und demgemäß eine in Abhängigkeit vom Fahrtzustand zuverlässige automatische Betätigung der Feststellbremse gewährleisten.

Bezüglich der vom Sensor der Radsensorik generierten Signale ist ein Verstärker mit nachgeordnetem Gleichrichter vorgesehen, um auch geringe Signalamplituden der durch den Sensor bereitgestellten Signale für den Mikrocontroller erkennbar zu machen.

Weiter ist vorgesehen, dass der elektronischen Regel- und Steuereinheit ein die Funktion des Elektromotors auch bei Abschalten des Hauptantriebs des Kraftfahrzeugs gewährleistender Verzögerungskreis zugeordnet ist.

Fernerhin wird im Sinne der Erfindung vorgeschlagen, dass der Sensor der Radsensorik elektrisch oder berührungslos mit der Regel- und Steuereinheit verbunden ist.

Wie die Erfindung zudem vorsieht, kann die elektromechanische Feststellbremse sowohl vollautomatisch als auch halbautomatisch durch manuelle Betätigung eines Betätigungsmittels ansteuerbar sein.

Das Verfahren zum Betreiben einer elektromechanischen Feststellbremse an Kraftfahrzeugen zeichnet sich insbesondere dadurch aus, dass
- mittels einer Radsensorik mit Drehzahl-, Drehrichtungs- und Stillstandserkennung der aktuelle Fahrtzustand des Kraftfahrzeugs erfasst und zu den erfassten Messwerten ensprechende Signale generiert sowie elektrisch oder berührungslos der elektronischen Regel- und Steuereinheit zugeführt werden,
- die erfassten aktuellen Messwerte vermittels der elektronischen Regel- und Steuereinheit mit einem oder mehreren vorgegebenen Referenzwerten verglichen werden,
- bei Vorliegen einer bestimmten Abweichung oder eines Trends der Abweichung auf eine Bewegung oder auf einen Stillstand des Kraftfahrzeugs geschlossen und
- schließlich ein Steuersignal zur Ansteuerung des Elektromotors erstellt wird.

Neben besagten Signalen der Radsensorik können des Weiteren Signale über einen etwaigen Zündvorgang und/oder über das etwaige Betätigen einer Kupplung und/oder das etwaige Einlegen eines ersten Ganges oder eines Rückwärtsganges der Regel- und Steuereinheit zugeführt und durch dieselbe verarbeitet werden.

In vorteilhafter Ausgestaltung der Erfindung kann das erstellte Steuersignal für den Elektromotor ferner als Informationssignal dem Fahrzeugführer zur Verfügung gestellt werden.

Ebenso kann es angezeigt sein, die elektromechanische Feststellbremse sowohl vollautomatisch als auch halbautomatisch durch manuelle Betätigung eines Betätigungsmittels anzusteuern.

Die Erfindung wird nachstehend anhand eines in den Zeichnungen schematisch dargestellten Ausführungsbeispieles näher erläutert. Es zeigen:
- Fig. 1: eine schematische Darstellung einer erfindungsgemäß ausgebildeten elektromechanischen Feststellbremse,
- Fig. 2: die Einzelheit "Z" nach Fig. 1, und

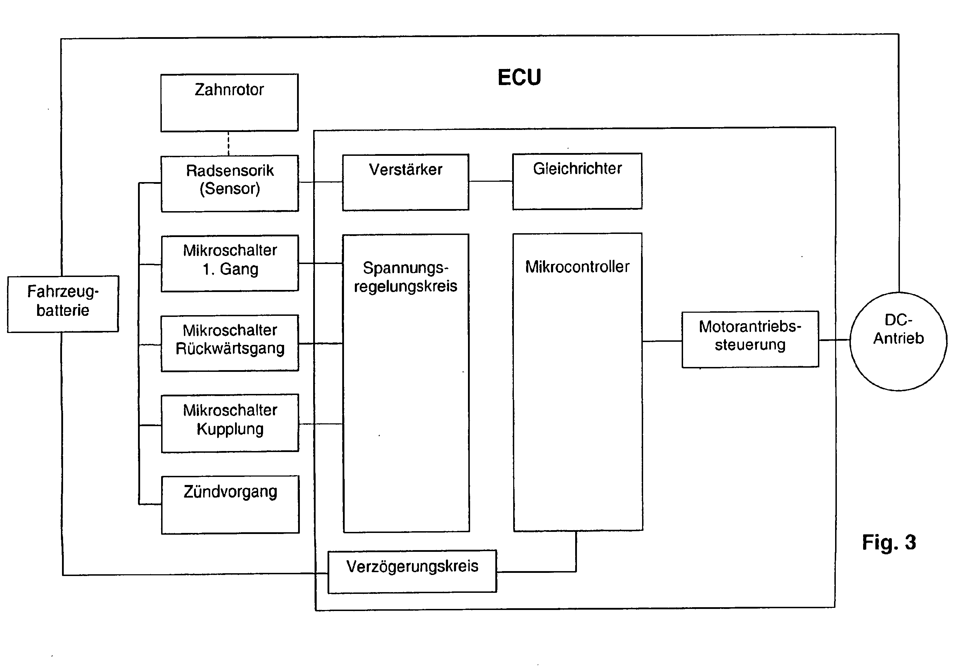

- Fig. 3: einen Schaltplan der elektronischen Regel- und Steuereinheit zur Betätigung der elektromechanischen Feststellbremse.

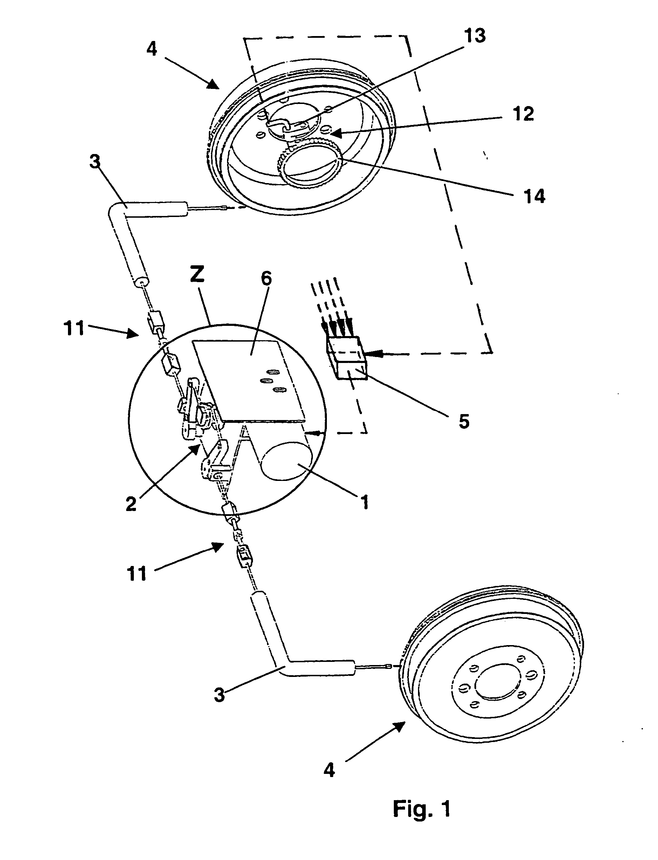

Fig. 1 zeigt äußerst schematisch eine elektromechanische Feststellbremse für Kraftfahrzeuge, die ihrerseits einen Elektromotor 1, vorzugsweise Gleichstrommotor (DC-Antrieb), aufweist, der zweckmäßigerweise batteriebetrieben und über ein Getriebe 2 und zumindest ein Kraftübertragungselement 3, wie einem Bremsseil oder einem Bremsgestänge, mit zumindest einer Radbremse 4 wirkverbunden ist.

Die Ansteuerung des Elektromotors 1 erfolgt vermittels einer hier nur schematisch dargestellten elektronischen Regel- und Steuereinheit 5 (ECU = electronic control unit).

Vorliegend sind im Hinblick auf eine an sich bekannte Ausführung mit zwei Kraftübertragungselementen 3 dieselben jeweils mit einem nicht näher gezeigten Bremsorgan der Radbremse 4 eines der Hinterräder verbunden, wobei lediglich die Bremstrommel einer an sich bekannten Trommelbremse gezeigt ist, welcher herkömmlich Bremsorgane in Form von Bremsbacken zugeordnet sind.

Selbstverständlich kann das Kraftübertragungselement 3 auch durch ein einziges sogenanntes Hauptseil oder ein Hauptgestänge gebildet sein, welches sich beispielsweise im Bereich der Hinterachse in zwei Nebenseile bzw. Nebengestänge verzweigt und schließlich der jeweiligen Radbremse 4 respektive deren Bremsorganen zugeführt ist.

Ebenso kann die Radbremse 4 auch durch eine an sich bekannte und demgemäß nicht weiter zu erläuternde Scheibenbremse gebildet sein.

Besagter Elektromotor 1 ist vorliegend an einem horizontal ausgerichteten plattenförmigen Aufnahmeelement 6 festgelegt, das seinerseits an einem tragenden Bauteil der nicht näher dargestellten Fahrzeugkarosserie befestigt ist.

Als zweckmäßig wird eine Anordnung des plattenförmigen Aufnahmeelementes 6 zwischen den Hinterrädern mittig der Hinterachse erachtet (nicht näher dargestellt).

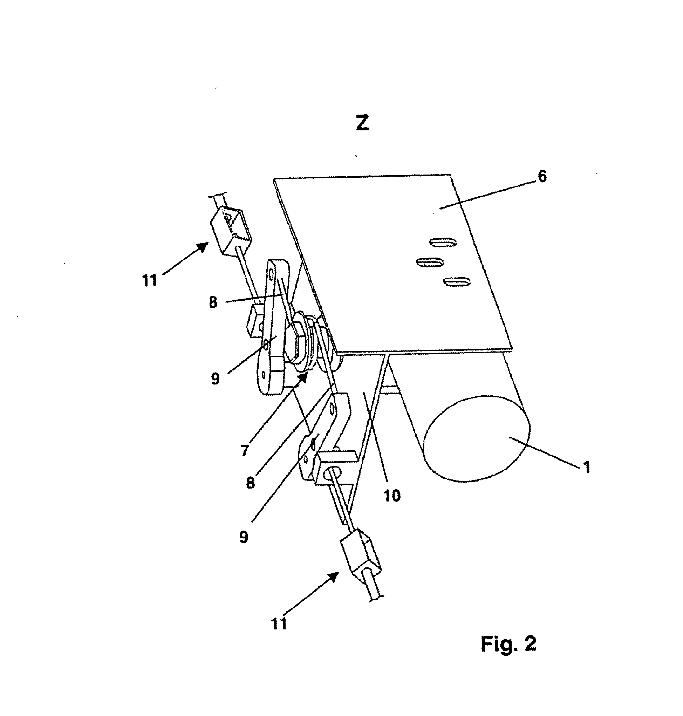

Wie besonders gut aus Fig. 2 ersichtlich ist, umfasst das Getriebe 2, über welches der Elektromotor 1 mit dem/den Kraftübertragungselement/en 3 verbunden ist, eine mit der nicht näher gezeigten Motorwelle des Elektromotors 1 drehverbundene Riemenscheibe 7, welcher zumindest ein, vorliegend im Hinblick auf eine Ausführung der Feststellbremse mit zwei Kraftübertragungselementen 3 zwei langgestreckte und wenigstens abschnittsweise flexible Zugelemente 8 zugeordnet sind.

Jedes Zugelement 8 ist dabei einerends im Bereich des Außenumfanges der Riemenscheibe 7, zweckmäßigerweise innerhalb einer Bohrung im Bereich einer Umfangsrille der Riemenscheibe 7 an derselben aufwickelbar festgelegt.

Anderenends sind die Zugelemente 8 jeweils mit einem Hebelelement 9 verbunden, das wiederum jeweils über das Kraftübertragungselement 3 mit der jeweils zugeordneten Radbremse 4 verbunden ist.

Die Hebelelemente 9 sind vorliegend an einem am horizontal ausgerichteten Aufnahmeelement 6 festgelegten vertikal ausgerichteten plattenförmigen Aufnahmeelement 10 drehbar angelenkt.

Wie insbesondere der Fig. 1 weiter zu entnehmen ist, weisen die Kraftübertragungselemente 3 jeweils ein Mittel 11 zur Realisierung einer konstanten Zugspannung in demselben und/oder zur Voreinstellung der zueinander in Reibschluss tretenden Bremsorgane der Radbremse 4 auf.

Besagtes Mittel 11 ist insoweit durch herkömmliche zueinander korrespondierende Schraubelemente gebildet, mit deren Hilfe durch axiales Verstellen derselben zueinander sich die Spannung im Kraftübertragungselelement 3 einstellen lässt.

Fernerhin zeigt Fig. 1 eine Radsensorik 12, die ihrerseits zur Erfassung des aktuellen Fahrtzustandes des Kraftfahrzeugs vorgesehen und mit der elektronischen Regel- und Steuereinheit 5 elektrisch verbunden ist. Denkbar ist es jedoch auch und wird durch die Erfindung mit erfasst, dass besagte Radsensorik 12 berührungslos, beispielsweise vermittels Funk mit der elektronischen Regel- und Steuereinheit 5 verbunden ist.

Nach einer bevorzugten Ausführungsform ist die Radsensorik 12 durch einen drehfest im Bereich des Rades angeordneten Sensor 13 mit Drehzahl-, Drehrichtungs- und Stillstandserkennung sowie einem zu diesem korrespondierenden und mit dem Rad bzw. dessen Radnabe drehverbundenen Zahnrotor 14 gebildet.

Als Sensor 13 bietet sich insbesondere ein berührungsloser Sensor 13, beispielsweise ein induktiver Sensor 13 mit einem Permanentmagneten an, so dass beim Rotieren des Zahnrotors 14 zwischen den Rotorzähnen desselben und dem Sensor 13 ein Luftspalt zu verzeichnen ist.

Durch die Drehbewegung des Rades und demgemäß des Zahnrotors 14 und das Vorbeiführen des Zahnrotors 14 am induktiven Sensor 13 werden die vom Permanentmagneten erzeugten magnetischen Feldlinien verändert und in der Folge eine sinusförmige Wechselspannung induziert, die ihrerseits als Messgröße und schließlich, wie bereits oben dargetan, als Regelgröße der elektronischen Regel- und Steuereinheit 5 zur Verfügung gestellt werden kann. Die Frequenz der sinusförmigen Wechselspannung ist dabei abhängig von der Drehzahl.

Nachfolgend wird die Erfindung an einem Verfahren zum Betreiben der elektromechanischen Feststellbremse 5 weiter beschrieben.

Die elektronische Regel- und Steuereinheit 5 stellt den Systemkern der elektromechanischen Feststellbremse dar und kann beispielsweise innerhalb der Fahrgastzelle, demgemäß witterungsgeschützt und leicht zugänglich angeordnet sein.

Damit das System automatisch wirkt und unterschiedlichsten Situationen entsprechend dem Fahrerverhalten und somit den aktuellen Fahrtzuständen gerecht wird, werden die vermittels der Radsensorik 12 respektive des Sensors 13 sensierten Radgeschwindigkeiten als Basisdaten zugrunde gelegt.

Insoweit handelt es sich bei besagtem Sensor 13 um einen passiven Sensor 13, der über eine Drehzahl-, Drehrichtungs- und Stillstandserkennung verfügt und anhand der Anzahl von Radsensorpulsen pro Zeiteinheit den aktuellen Fahrtzustand erkennt sowie entsprechend der Umdrehungen des Zahnrotors 14 sinusförmige Signale mit variablen Frequenzen und Amplituden erzeugt und der elektronischen Regel- und Steuereinheit 5 zuleitet.

Erfasste Messwerte bzw. die daraus generierten Signale können nunmehr mit einem oder mehreren vorgegebenen Referenzwerten verglichen und bei Vorliegen einer bestimmten Abweichung oder eines Trends der Abweichung auf eine Bewegung oder auf einen Stillstand des Kraftfahrzeugs geschlossen werden.

Schließlich kann bei Empfang von Signalen ein Steuersignal zur Ansteuerung des Elektromotors 1 im Sinne eines Zuspannens der Radbremse 4 oder eines Lösens derselben erstellt werden. Wird dagegen kein Puls bzw. Signal an die elektronische Regel- und Steuereinheit 5 gesandt, wird daraus geschlossen, dass sich das Kraftfahrzeug nicht bewegt.

Neben den Signalen der Radsensorik 12 können des Weiteren Signale über einen etwaigen Zündvorgang und/oder über das etwaige Betätigen einer Kupplung und/oder das etwaige Einlegen eines ersten Ganges oder eines Rückwärtsganges der Regel- und Steuereinheit 5 zugeführt und durch dieselbe verarbeitet werden.

Insoweit umfasst die elektronische Regel- und Steuereinheit 5 neben einem Mikrocontroller eine Mehrzahl Eingangskreise, einen Ausgangskreis und ferner einen Verzögerungskreis sowie einen Spannungsregelungskreis.

Danach sind somit neben einem Eingang für vom Sensor 13 der Radsensorik 12 generierte Signale wenigstens ein Eingang zum Einlesen eines etwaigen Zündvorganges, ein Eingang zum Einlesen einer etwaigen Kupplungsbetätigung, ein Eingang zum Einlesen eines etwaige betätigten ersten Ganges sowie ein Eingang zum Einlesen eines etwaige betätigten Rückwärtsganges vorgesehen, wobei insbesondere die Kupplungsbetätigung und das Einlegen der besagten Gänge vermittels Mikroschalter erfasst wird.

Der Mikrocontroller dient zur Bereitstellung von Steuersignalen zur Ansteuerung des Elektromotors 1.

So kann beispielsweise der Mikrocontroller dem Elektromotor 1 ein Signal zum Lösen der Radbremse 4 geben, wenn der Fahrzeugführer das Kupplungspedal betätigt und gleichzeitig in den ersten Gang schaltet, welches sinngemäß bedeutet, dass das Kraftfahrzeug sich gerade an einer Bewegungsschwelle befindet.

Aufgrund der Tatsache, dass die Signalamplituden des Sensors 13 bei niedrigen Fahrgeschwindigkeiten, d. h., niedrigen Umdrehungszahlen des Zahnrotors 14, sehr klein sind, jedoch dennoch die Signalamplitude bei der entsprechenden Bewegungsschwelle durch den Mikrocontroller erkannt werden soll, ist das Signal in geeigneter Weise zu verstärken, wozu sich insbesondere ein an sich bekannter Verstärker mit nachgeordnetem Gleichrichter anbietet.

Des Weiteren wird vermittels des sogenannten Verzögerungskreises dem Umstand Rechnung getragen, dass unmittelbar nach Abstellen des Hauptantriebes des Kraftfahrzeugs noch eine Beeinflussung des Elektromotors 1 im Sinne eines Zuspannens der Radbremsen 5 zu gewährleisten ist.

Für den Fachmann sicherlich leicht nachvollziehbar, kann es von Vorteil sein, dass erstellte Steuersignale für den Elektromotor 1 der elektromechanischen Feststellbremse als Informationssignale dem Fahrzeugführer zur Verfügung gestellt werden, welches sowohl optisch als auch akustisch geschehen kann.

Ebenso ist es denkbar, neben einer vollautomatischen auch eine halbautomatische Betätigung der elektromechanischen Feststellbremse, beispielsweise per Knopfdruck, vorzusehen, um dem Fahrzeugführer immer die Gelegenheit zu geben, das Bremsverhalten situationsbedingt selbst zu bestimmen.

## Patentansprüche

1. Elektromechanische Feststellbremse an Kraftfahrzeugen, mit einem Elektromotor (1), der seinerseits über ein Getriebe (2) und zumindest ein Kraftübertragungselement (3) mit zumindest einer Radbremse (4) wirkverbunden sowie vermittels einer elektronischen Regel- und Steuereinheit (5), welcher zumindest eine Radsensorik (12) zur Erfassung des aktuellen Fahrtzustandes des Kraftfahrzeugs zugeordnet ist, ansteuerbar ist,
**dadurch gekennzeichnet, dass**
das Getriebe (2) eine mit der Motorwelle des Elektromotors (1) drehverbundene Riemenscheibe (7) umfasst, welcher zumindest ein wenigstens abschnittsweise flexibles Zugelement (8) zugeordnet ist, wobei das Zugelement (8) einerehds im Bereich des Außenumfanges der Riemenscheibe (7) an derselben aufwickelbar festgelegt und anderenends mit einem Hebelelement (9) verbunden ist, das seinerseits über besagtes Kraftübertragungselement (3) mit der zumindest einen Radbremse (4) wirkverbunden ist.

2. Elektromechanische Feststellbremse nach Anspruch 1,
**dadurch gekennzeichnet, dass**
die Radsensorik (12) zur Erfassung des aktuellen Fahrtzustandes des Kraftfahrzeugs durch einen drehfest angeordneten Sensor (13) mit Drehzahl-, Drehrichtungs- und Stillstandserkennung sowie einem zu diesem korrespondierenden und mit einem Rad des Kraftfahrzeugs drehverbundenen Zahnrotor (14) gebildet ist.

3. Elektromechanische Feststellbremse nach Anspruch 2,
**dadurch gekennzeichnet, dass**
der Sensor (13) der Radsensorik (12) ein berührungsloser Sensor (13) ist.

4. Elektromechanische Feststellbremse nach Anspruch 3,
**dadurch gekennzeichnet, dass**
der berührungslose Sensor (13) durch einen induktiven Sensor (13) gebildet ist.

5. Elektromechanische Feststellbremse nach einem der Ansprüche 1 bis 4,
**dadurch gekennzeichnet, dass**
das Kraftübertragungselement (3) ein Mittel (11) zur Realisierung einer konstanten Zugspannung in demselben und/oder zur Voreinstellung der zueinander in Reibschluss tretenden Bremsorgane der Radbremse (4) aufweist.

6. Elektromechanische Feststellbremse nach einem der Ansprüche 1 bis 5,
**dadurch gekennzeichnet, dass**
die elektronische Regel- und Steuereinheit (5) neben einem Eingang für vom Sensor (13) der Radsensorik (12) generierte Signale wenigstens einen Eingang zum Einlesen eines etwaigen Zündvorganges, einen Eingang zum Einlesen einer etwaigen Kupplungsbetätigung, einen Eingang zum Einlesen eines etwaige betätigten ersten Ganges, einen Eingang zum Einlesen eines etwaige betätigten Rückwärtsganges sowie einen Mikrocontroller zur Bereitstellung von Steuersignalen zur Ansteuerung des Elektromotors (1) aufweist.

7. Elektromechanische Feststellbremse nach Anspruch 6,
**dadurch gekennzeichnet, dass**
bezüglich der vom Sensor (13) der Radsensorik (12) generierten Signale ein Verstärker mit nachgeordnetem Gleichrichter vorgesehen ist.

8. Elektromechanische Feststellbremse nach einem der Ansprüche 6 und 7,
**dadurch gekennzeichnet, dass**
der elektronischen Regel- und Steuereinheit (5) ein die Funktion des Elektromotors (1) auch bei Abschalten des Hauptantriebs des Kraftfahrzeugs gewährleistender Verzögerungskreis zugeordnet ist.

9. Elektromechanische Feststellbremse nach einem der Ansprüche 2 bis 8,
**dadurch gekennzeichnet, dass**
der Sensor (13) der Radsensorik (12) elektrisch oder berührungslos mit der Regel- und Steuereinheit (5) verbunden ist.

10. Elektromechanische Feststellbremse nach einem der Ansprüche 1 bis 9,
**dadurch gekennzeichnet, dass**
dieselbe sowohl vollautomatisch als auch halbautomatisch durch manuelle Betätigung eines Betätigungsmittels ansteuerbar ist.

## Claims

1. Electromechanical parking brake on motor vehicles, having an electric motor (1) which itself is operatively connected by means of a gearing (2) and at least one force transmission element (3) to at least one wheel brake (4) and can be activated by means of an electronic regulating and control unit (5) which is assigned at least one wheel sensor arrangement (12) for detecting the present driving state of the motor vehicle,
**characterized in that**
the gearing (2) comprises a pulley (7) which is rotationally connected to the motor shaft of the electric motor (1) and which is assigned at least one traction element (8) which is flexible at least in sections, with the traction element (8) being fixed at one end in the region of the outer periphery of the pulley (7) such that it can be wound on the latter and being connected at the other end to a lever element (9) which itself is operatively connected by means of said force transmission element (3) to the at least one wheel brake (4).

2. Electromechanical parking brake according to Claim 1,
**characterized in that**
the wheel sensor arrangement (12) for detecting the present driving state of the motor vehicle is formed by a rotationally fixedly arranged sensor (13), with rotational speed, rotational direction and standstill recognition, and a toothed rotor (14) which corresponds to said sensor (13) and is rotationally connected to a wheel of the motor vehicle.

3. Electromechanical parking brake according to Claim 2,
**characterized in that**
the sensor (13) of the wheel sensor arrangement (12) is a non-contact sensor (13).

4. Electromechanical parking brake according to Claim 3,
**characterized in that**
the non-contact sensor (13) is formed by an inductive sensor (13).

5. Electromechanical parking brake according to one of Claims 1 to 4,
**characterized in that**
the force transmission element (3) has a means (11) for obtaining a constant tension in said force transmission element (3) and/or for pre-adjusting those braking elements of the wheel brake (4) which come into frictional engagement with one another.

6. Electromechanical parking brake according to one of Claims 1 to 5,
**characterized in that**
the electronic regulating and control unit (5) has, in addition to an input for signals generated by the sensor (13) of the wheel sensor arrangement (12), at least one input for reading in any ignition process, an input for reading in any clutch actuation, an input for reading in any actuation of a first gear, an input for reading in any actuation of a reverse gear, and a microcontroller for providing control signals for activating the electric motor (1).

7. Electromechanical parking brake according to Claim 6,
**characterized in that**
an amplifier with a downstream rectifier is provided for the signals generated by the sensor (13) of the wheel sensor arrangement (12).

8. Electromechanical parking brake according to one of Claims 6 and 7,
**characterized in that**
the electronic regulating and control unit (5) is assigned a delay circuit which ensures the function of the electric motor (1) even when the main drive of the motor vehicle is switched off.

9. Electromechanical parking brake according to one of Claims 2 to 8,
**characterized in that**
the sensor (13) of the wheel sensor arrangement (12) is connected electrically or without contact to the regulating and control unit (5).

10. Electromechanical parking brake according to one of Claims 1 to 9,
**characterized in that**
said electromechanical parking brake can be activated fully automatically and also semiautomatically by manual actuation of an actuating means.

## Revendications

1. Frein de stationnement électromécanique sur véhicules automobiles, comprenant un moteur électrique (1) qui est de son côté en liaison active avec au moins un frein de roue (4) par le biais d'un engrenage (2) et d'au moins un élément de transmission de force (3) et qui peut être commandé par l'intermédiaire d'une unité électronique de régulation et de commande (5) à laquelle est associé au moins un dispositif de détection de roue (12) destiné à détecter l'état de déplacement actuel du véhicule automobile, **caractérisé en ce que** l'engrenage (2) comprend une poulie à courroie (7) en liaison rotative avec l'arbre du moteur électrique (1) à laquelle est associé au moins un élément de traction (8) dont au moins certaines sections sont souples, l'élément de traction (8) étant fixé par une extrémité dans la zone du pourtour extérieur de la poulie de courroie (7) de manière à pouvoir s'enrouler sur celle-ci et étant relié par l'autre extrémité avec un élément levier (9) qui, de son côté, est en liaison active avec l'au moins un frein de roue (4) par le biais dudit élément de transmission de force (3).

2. Frein de stationnement électromécanique selon la revendication 1, **caractérisé en ce que** le dispositif de détection de roue (12) destiné à détecter l'état de déplacement actuel du véhicule automobile est formé par un capteur (13) non rotatif avec détection de la vitesse de rotation, du sens de rotation et de l'arrêt, et avec un rotor denté (14) correspondant à celui-ci et en liaison rotative avec une roue du véhicule automobile.

3. Frein de stationnement électromécanique selon la revendication 2, **caractérisé en ce que** le capteur (13) du dispositif de détection de roue (12) est un capteur sans contact (13).

4. Frein de stationnement électromécanique selon la revendication 3, **caractérisé en ce que** le capteur sans contact (13) est formé par un capteur inductif (13) .

5. Frein de stationnement électromécanique selon l'une des revendications 1 à 4, **caractérisé en ce que** l'élément de transmission de force (3) présente un moyen (11) pour réaliser une contrainte de tension constante dans celui-ci et/ou pour prérégler les organes de freinage du frein de roue (4) qui entrent en friction l'un contre l'autre.

6. Frein de stationnement électromécanique selon l'une des revendications 1 à 5, **caractérisé en ce que** l'unité électronique de régulation et de commande (5), en plus d'une entrée pour les signaux générés par le capteur (13) du dispositif de détection de roue (12), présente au moins une entrée pour lire un éventuel processus d'allumage, une entrée pour lire un éventuel actionnement de l'embrayage, une entrée pour lire un premier rapport éventuellement engagé, une entrée pour lire une marche arrière éventuellement engagée ainsi qu'un microcontrôleur pour délivrer des signaux de commande destinés à commander le moteur électrique (1).

7. Frein de stationnement électromécanique selon la revendication 6, **caractérisé en ce qu'**un préamplificateur suivi d'un redresseur est prévu pour les signaux générés par le capteur (10) du dispositif de détection de roue (12).

8. Frein de stationnement électromécanique selon l'une des revendications 6 et 7, **caractérisé en ce qu'**un circuit de retard qui garantit le fonctionnement du moteur électrique (1) même en cas d'arrêt du groupe propulseur principal du véhicule automobile est associé à l'unité électronique de régulation et de commande (5) .

9. Frein de stationnement électromécanique selon l'une des revendications 2 à 8, **caractérisé en ce que** le capteur (13) du dispositif de détection de roue (12) est relié électriquement ou sans contact avec l'unité de régulation et de commande (5).

10. Frein de stationnement électromécanique selon l'une des revendications 1 à 9, **caractérisé en ce que** celui-ci peut être commandé aussi bien automatiquement que semi-automatiquement en actionnant manuellement un moyen d'actionnement.
